# EUROPÄISCHE PATENTANMELDUNG

(11) **EP 1 096 629 A1**
(43) Veröffentlichungstag der Anmeldung: **02.05.2001**
(21) Anmeldenummer: 00122764.4
(22) Anmeldetag: 19.10.2000
(51) Int. Cl.: H02G 3/04

(54) **Versorgungseinheit**

(30) Priorität: 29.10.1999 DE 29918977 U
(71) Anmelder: TRILUX-LENZE GmbH & Co. KG, D-59759 Arnsberg (DE)
(72) Erfinder: Draken, Dieter, 59755 Arnsberg (DE)
(74) Vertreter: Patentanwälte Lippert, Stachow, Schmidt & Partner

(57) **Zusammenfassung**

Die Erfindung betrifft eine Versorgungseinheit bestehend aus mindestens einem kanalartigen Profil zur Aufnahme und Führung von Versorgungsleitungen, das einen an einem Untergrund befestigbaren, in Längserstreckungsrichtung verlaufenden Grundsteg und mindestens einen im wesentlichen quer zum Grundsteg verlaufenden Quersteg aufweist. Um eine solche Versorgungseinheit derart weiterzuentwickeln, daß diese kostengünstiger kundenspezifisch fertigbar und einfacher an sich verändernde raumgestalterische Gegebenheiten anpaßbar ist, wird vorgeschlagen, daß der Quersteg (2d) mindestens ein Loch aufweist, und daß im Bereich des Lochs ein Anbau in Längserstreckungsrichtung der Versorgungseinheit (2) verschieblich fixierbar ist, an dem Anschlußeinrichtungen (14), Leuchten und dergleichen vorgesehen sind, die durch das Loch mit den Versorgungsleitungen verbindbar sind.

## Beschreibung

Die Erfindung betrifft eine Versorgungseinheit, insbesondere zur Versorgung von Patienten im Krankenpflegebereich, bestehend aus mindestens einem, vorzugweise kanalartigen, Profil zur Aufnahme und Führung von Versorgungsleitungen, das einen an einem Untergrund befestigbaren, in Längserstreckungsrichtung verlaufenden Grundsteg und mindestens einen im wesentlichen quer zum Grundsteg verlaufenden Quersteg aufweist.

Eine derartige Versorgungseinheit ist beispielsweise aus der europäischen Patentschrift 0 551 600 der Anmelderin bekannt. Üblicherweise wird bei einer derartigen versorgungseinheit eine Gehäuseeinheit an einer Wand befestigt und nimmt zwei oder mehrere übereinander angeordnete, unmittelbar gegeneinanderstoßende Profile auf. Jedes Profil hat im wesentlichen einen U-förmigen Querschnitt mit einem an dem Untergrund befestigbaren, in Längserstreckungsrichtung verlaufenden Grundsteg und zwei sich im wesentlichen quer zum Grundsteg, in Einbaulage horizontal von der Wand abstehende obere und untere Querstege. Zwischen den Querstegen ist eine nach vorne (von der Wand fort) gerichtete Öffnung vorgesehen. Die Öffnung kann durch Abdeckungen verschlossen werden, wobei die Abdeckungen in der Regel eine geringere Länge aufweisen als die Kanalgehäuse. Die Abdeckungen enthalten Anschlußeinrichtungen für die Stromversorgung, elektrische Signalverbindungen, Meßleitungen oder Druckluft, Vakuum, Gas und dergleichen. Die Versorgungseinheit kann auch nur aus einem U-förmigen Profil bestehen. Wenn zwei übereinander angeordnete Kanäle eingesetzt werden, sind diese durch die Seitenschenkel der U-Profile voneinander getrennt, die eine gemeinsame Trennwand zwischen den Kanälen ausbilden. Es kann zum Beispiel sein, daß in dem einen Kanal elektrische Leitungen geführt sind, während in dem daran angrenzenden Kanal Gasleitungen bzw. Vakuumleitungen angeordnet sind. Die gegenseitige Trennung solcher Leitungen ist erforderlich, damit nicht innerhalb eines Gaskanals durch elektrische Defekte Explosionen entstehen können.

Die Kanalgehäuse sowie auch die Abdeckungen bestehen üblicherweise aus Strangprofilen aus Stahl, die über ihre gesamte Länge einen konstanten Querschnitt von etwa 3 - 5 mm aufweisen.

Für eine problemlose Versorgung des Patienten, insbesondere im Intensivpflegebereich, ist es erforderlich, daß die Anschlußeinrichtungen in unmittelbarer Nähe des Bettes gelegen sind. Aus diesem Grund müssen in Abhängigkeit von den Abmessungen des Raumes die Versorgungseinheiten kundenindividuell gefertigt werden, um die Anschlußeinrichtungen unmittelbar über dem Bett zu positionieren. Die Versorgungseinheit ist mit einer Anschlußseite versehen, die zumindest einseitig unmittelbar an eine Wand des Raumes angrenzt. Je nach der Geometrie des Raumes, der Aufstellung der in dem Raum angeordneten Möbel und der gewünschten Bettenzahl, müssen die Versorgungseinheiten kundenindividuell konfektioniert, d. h. auf Länge geschnitten und an den gewünschten Stellen mit den Anschlußeinrichtungen bestückt werden. Die Versorgungseinheit und insbesondere die mit den Anschlußeinrichtungen versehenen Abdeckungen müssen der Größe nach so zurechtgeschnitten werden, daß diese unmittelbar oberhalb der theoretischen Mitte der Betten gelegen sind, die in dem Raum plaziert werden sollen. Für diese kundenindividuelle Fertigung ist seitens der Hersteller derartiger Versorgungseinheiten ein nicht unerheblicher Planungsaufwand notwendig. Insbesondere müssen spezialisierte Ingenieure für die Planung und Entwicklung herangezogen werden, was die Fertigung sehr kostenintensiv macht.

Falls die Aufstellung des Mobiliars und die Anzahl der Betten in einem Raum verändert werden sollen, muß entweder die längsseitig über den Betten befestigte Versorgungseinheit mit zumindest geometrisch anders ausgestalteten Abdeckungen versehen werden oder in Kauf genommen werden, daß die Anschlußeinrichtungen nicht optimal oberhalb der neuen theoretischen Bettenmitte positioniert sind.

Der Erfindung liegt das technische Problem zugrunde, eine gattungsgemäße Versorgungseinheit derart weiterzuentwickeln, daß diese kostengünstiger kundenspezifisch fertigbar und einfacher an sich verändernde raumgestalterische Gegebenheiten anpaßbar ist.

Erfindungsgemäß wird dieses technische Problem dadurch gelöst, daß ein Quersteg mindestens ein Loch aufweist, und das im Bereich des Lochs ein Anbau in Längserstreckungsrichtung der Versorgungseinheit axialverschieblich fixierbar ist, an dem Anschlußeinrichtungen, Leuchten und dergleichen vorgesehen sind, die durch das Loch mit den Versorgungsleitungen der Versorgungseinheit verbindbar sind.

Zweckmäßigerweise ist das Loch als Langloch ausgebildet. Diese Ausgestaltung verhindert das Abknicken oder Einklemmen der Leitungen und Kabel durch optimierte Biegeradien, durch die sich darüber hinaus eine besonders geringe Bauhöhe der Anbauten realisieren läßt.

Der Anbau weist üblicherweise eine Länge von etwa 1 m auf und ist in Einbaulage vorderseitig oder unterseitig mit Anschlußeinrichtungen für die Stromversorgung, elektrischen Steckverbindungen, Meßleitungen oder Druckluft, Vakuum, Gas oder dergleichen versehen.

Vorzugsweise sind die Anschlußeinrichtungen lösbar mit den Versorgungsleitungen der Versorgungseinheit verbindbar, beispielsweise durch Steckverbindungen.

Durch die erfindungsgemäße Ausgestaltung können die Anbauten genau mittig über den Kopfenden der Betten positioniert werden. Das Langloch mit einer Länge von ca. 30 cm stellt sicher, daß der Anbau über einen weiten Bereich verschiebbar anbringbar ist. Letztendlich muß nur sichergestellt werden, daß der Anbau das Langloch abdeckt.

Besonders vorteilhaft ist es, wenn das Langloch oder die Langlöcher an dem in Einbaulage unteren Quersteg vorgesehen ist und der Anbau als gondelartiger Unterbau ausgebildet ist, da ein derartiger Unterbau besonders leicht zugänglich ist.

Um die Verbindung der Anschlußeinrichtungen des Anbaus mit den in der Versorgungseinheit vorgesehenen Versorgungsleitungen zu vereinfachen, hat es sich als vorteilhaft erwiesen, wenn der Anbau relativ zu der Versorgungseinheit von dem Unterbau vorziehbar ausgebildet ist; etwa nach Art einer Schublade. Es ist beispielsweise möglich, daß unterseitig an dem Quersteg T-förmige Längsnuten vorgesehen sind, in welche die Köpfe von Schrauben oder Bolzen längsverschieblich einsetzbar sind. An diesen Schrauben können die Anbauten über Muttern befestigt werden. Durch Lösen der Muttern ist der gesamte Anbau längsverschieblich entlang der Längsrichtung der Versorgungseinheit verschiebbar. In der gewünschten Stellung werden die Schrauben angezogen, um den Anbau zu fixieren.

Zusätzlich können Arretiermittel vorgesehen sein, die beim Abziehen des Anbaus ein Herausfallen verhindern.

Zur Beleuchtung des Zimmers oder der Beleuchtung des Bettenbereichs können in dem Anbau darüber hinaus Leuchten angeordnet sein. Es kann sich hier sowohl um nach oben strahlende Raumleuchten als um zum Bett strahlende Leseleuchten mit Rastern handeln. Durch die vorziehbare Ausbildung des Anbaus können die Leuchtmittel einfach ausgewechselt werden, ohne daß Werkzeug benötigt wird.

Die Anmelderin hat bei der Entwicklung der Erfindung festgestellt, daß die Abmessungen der Versorgungseinheiten immer in bestimmten, aber vorgegebenen Bandbreiten schwanken. Üblicherweise beträgt die Gesamtlänge einer versorgungseinheit eines 2-Bett-Zimmers zwischen 3,60 m und 4,60 m. Damit schwanken die Mitten der Versorgungseinheiten zwischen 1,80 m und 2,30 m. Unter der Voraussetzung, daß die Unterbauten jeweils in der Mitte jeder Hälfte der Versorgungseinheit angeordnet sind, schwankt die Mittelachse jedes Anbaus zwischen 900 mm und 1015 mm gemessen von der Wand mit der Anschlußseite. Wenn man ein Langloch von etwa 300 mm vorsieht und den An- bzw. Unterbau mit einer Länge von etwa 1000 mm ausgestaltet, kann die erfindungsgemäße Versorgungseinheit mit einem Verstellbereich von +/- 600mm, was etwa der Breite einer Kommode entspricht, jegliche Einbausituation in Standardräumen abdecken. In Abhängigkeit von der Raumabmessung, also der Kopflänge der Wand, an welcher die Versorgungseinheit montiert wird, kann das freie Ende, welches nicht mit einer Anschlußseite versehen ist, bedarfsgerecht gekürzt werden. Die axial freie Verstellbarkeit der Anbauten im Verhältnis zur Versorgungseinheit ermöglicht die zentrale Positionierung des Anbaus mittig über dein kopfseitigen Ende eines Bettes, in Abhängigkeit von der Geometrie des Raumes und der Mobiliaraufstellung im Raum. Falls die Mobiliaraufstellung geändert wird, können die Anbauten durch Lösen der Befestigungsmittel axial verschoben werden, um diese wieder mittig über dem kopfseitigen Ende des Bettes zu positionieren. Auf diese Weise wird der optimale Zugang zu den in dem Anbau vorgesehenen Anschlußeinrichtungen sichergestellt.

In den beiliegenden Zeichnungen sind vorteilhafte Ausführungsformen der erfindungsgemäßen Versorgungseinheit dargestellt, die im folgenden detailliert beschrieben werden. Es zeigen:
- Fig. 1: eine Frontansicht einer erfindungsgemäßen Versorgungseinheit, die in einem Raum an der Wand befestigt ist,
- Fig. 2: eine alternative Anordnung der Versorgungseinheit gemäß Figur 1,
- Fig. 3: eine vergrößerte Seitenansicht der erfindungsgemäßen Versorgungseinheit,
- Fig. 4: eine vergrößerte Frontansicht, teilweise im Schnitt, der Versorgungseinheit und
- Fig. 5: eine Seitenansicht im Schnitt entlang der Linie VI - VI gemäß Figur 1 mit eingesetzter Raumleuchte.

In den Figuren sind gleiche und entsprechende Bauteile mit denselben Bezugszeichen versehen. Die in den Figuren angegebenen Maßangaben sind beispielhaft zu verstehen und nicht auf die konkret angegebenen Maße beschränkt.

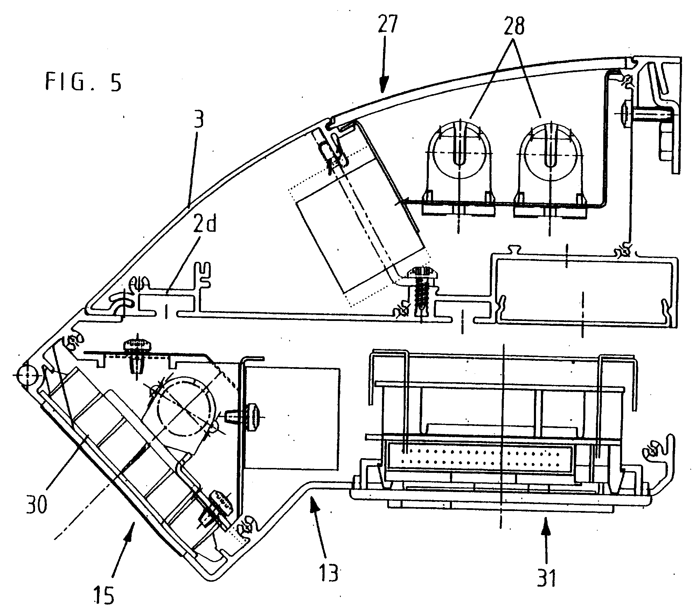

Wie aus den Figuren zu entnehmen ist, besteht die Versorgungseinheit 2 aus einem im wesentlichen L-förmigen Metallprofil. Die Versorgungseinheit weist einen Grundsteg 2a auf, mit dem diese an der Wand in bekannter Weise befestigbar ist. Dieses kann beispielsweise durch Einhängen der Versorgungseinheit in eine an der Wand festgeschraubten Befestigungsleiste erfolgen (siehe Fig. 5). Hierzu ist auf der Rückseite des Grundstegs durch einen Horizontalsteg 2b beabstandet ein querverlaufender Einhängesteg 2c vorgesehen. Einstückig an dem Grundsteg 2a ist ein Quersteg 2d angeformt, der in Einbaulage im wesentlichen horizontal verläuft und sich von der Wand weg erstreckt.

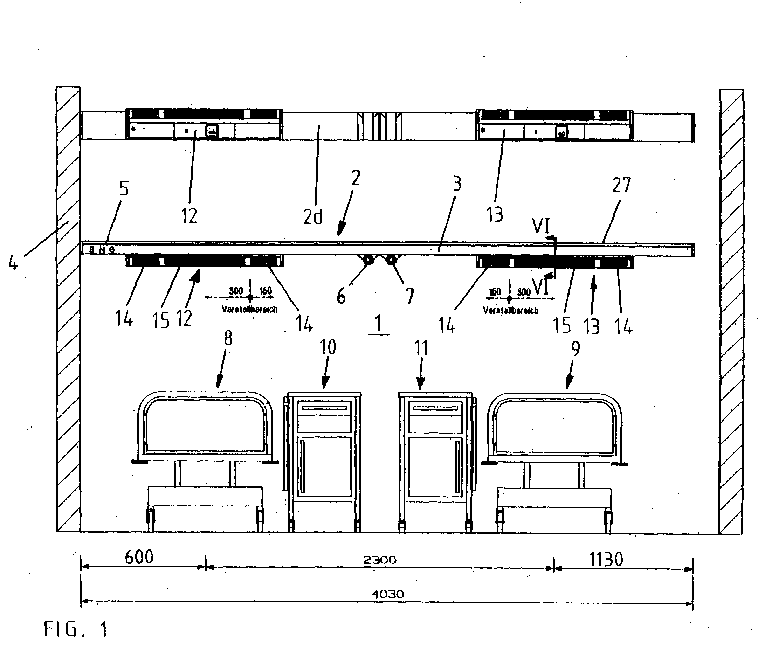

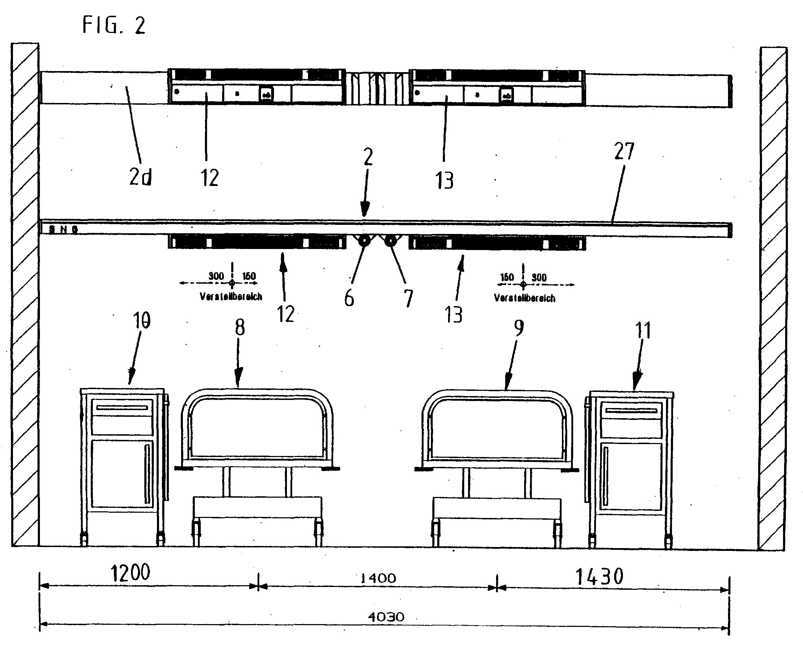

Ant vorderen Ende des Querstegs kann eine in den Figuren 1 und 2 vorderseitig sichtbare Abdeckung 3 über eine Schnappverbindung eingesetzt werden. Die Abdeckung 3 ist an dem vorderen Ende und in einem spitzen Winkel in Richtung der Wand 1 umgebogen, so daß der frei Schenkel der Abdeckung 3 in Richtung der Wand ragt. Vorliegend ist der freie Schenkel der Abdeckung 3 bogenförmig ausgebildet. Am äußeren Ende des freien Schenkels ist die Abdeckung 3 mit einer Aufnahme versehen, in die ein weiter unten zu beschreibendes Raumlicht lösbar einsetzbar ist.

Der wesentliche Erfindungsgedanke wird nunmehr unter Bezug auf die Figuren 1 und 2 näher erläutert. Wie diesen Figuren zu entnehmen ist, erstreckt sich die Versorgungseinheit über 4030 mm entlang nahzu der gesamten kopfseitigen Wand 1. Die Versorgungseinheit ist an dem längsseitigen Ende in der Nähe der Wand 4 mit einer Anschlußseite 5 versehen, mit denen die Versorgungseinheit mit den aus der Wand ragenden Leitungen verbunden ist. Es kann sich hierbei sowohl um Strom-, Gas-, Vakuum- und Druckleitungen handeln.

Diese Leitungen werden innerhalb der Versorgungseinheit bis zum freien Ende weitergeführt. Etwa in der Raummitte ist die versorgungseinheit auf ihrer Unterseite unterhalb des Querstegs 2b mit einem Druckluftanschluß 6 und einem Sauerstoffanschluß 7 in herkömmlicher Art und Weise versehen. Diese sind von beiden Betten 8 und 9 leicht zugänglich. Neben den Betten sind zwischen diesen zwei rollbare Kommoden 10 und 11 angeordnet.

Unterhalb des Querstegs 2b der Versorgungseinheit sind mittig über dem stirnseitigen Ende der Betten 8 und 9 gondelartige Unterbauten 12 und 13 an der Versorgungseinheit 2 vorgesehen. Die gondelartigen Unterbauten 12, 13 sind zwar fixiert, können aber entlang der Längsachse der Versorungseinheit 2 verschoben werden. An der in Blickrichtung vorderseitigen schrägen Seite der Unterbauten 12 und 13 sind die zuvor besagten Anschlußeinrichtungen 14 für die Stromversorgung, elektrische Signalverbindungen, Meßleitungen und dergleichen vorgesehen. Zwischen den Anschlußeinrichtungen 14 ist mittig ein Leselicht 15 vorgesehen, dessen Licht über ein Raster bekannter Art und Weise gestreut wird.

In dem Quersteg 2d sind jeweils zwei nicht näher dargestellte Langlöcher von etwa 300 mm Länge vorgesehen, deren Mitte durch die vertikal verlaufenden, gestrichelten Linien angedeutet ist. Gleichzeitig ist in bezug auf diese Mitte der Verstellbereich der Unterbauten mit 150mm zur Mitte der Versorgungseinheit 2 und mit 300mm von der Mitte Weg angegeben. Durch die Langlöcher werden die Versorgungsleitungen aus der Versorgungseinheit 2 in die Unterbauten 12 und 13 zu den Anschlußeinrichtungen 14 und den Leuchten geführt.

Die etwa 1000mm langen Unterbauten können in einem Bereich von +/- 300 mm in jeder Richtung verschoben werden, um diese immer mittig oberhalb des Kopfendes der Betten 8 und 9 zu plazieren.

Wenn beispielsweise die Raumaufteilung, wie in Figur 2 dargestellt, es erforderlich macht, daß die Kommoden 10 und 11 außenseitig von den Betten 8 und 9 angeordnet sind, werden die Unterbauten 12 und 13 durch Lösen der Muttern axial in Längsrichtung der Versorgungseinheit 2 jeweils zur Mitte verschoben, bis diese wieder oberhalb des kopfseitigen Endes der nunmehr neu plazierten Betten 8 und 9 gelegen sind. Das Loch oder Langloch ermöglicht dabei einen genügend weiten Verstellbereich und verhindert gleichzeitig ein Einklemmen der Versorgungsleitungen an den Übergangskanten.

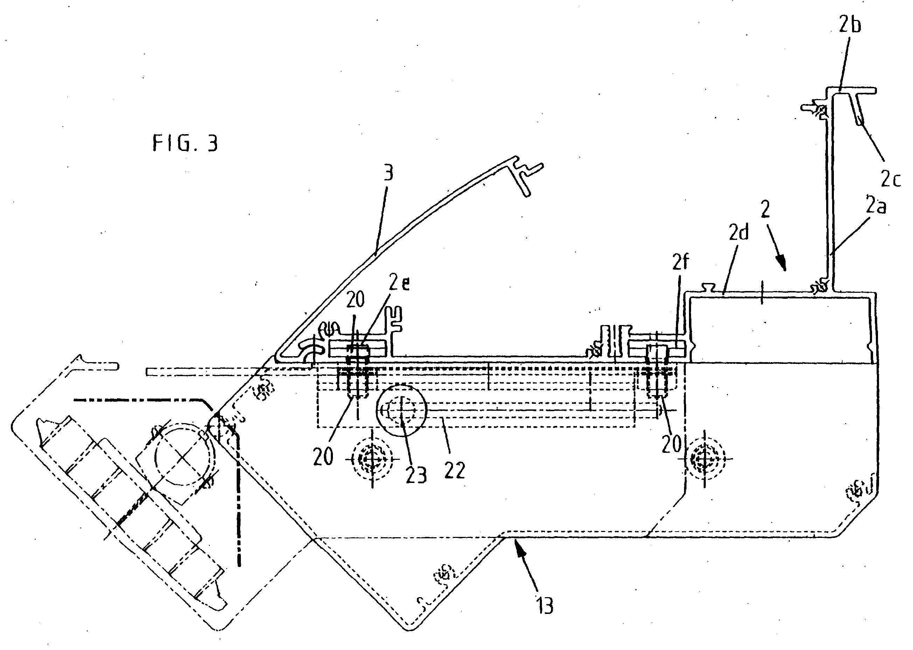

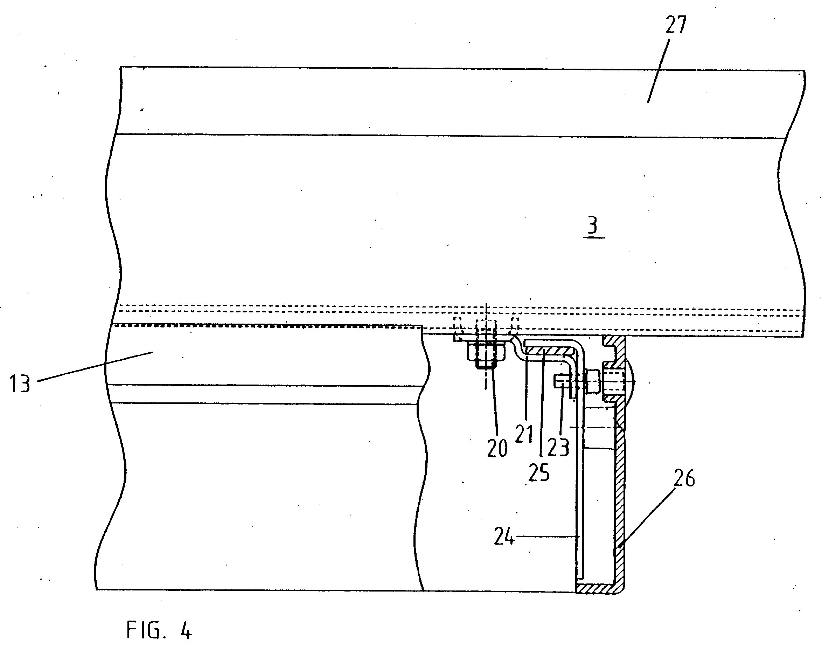

Unter Bezug auf die Figuren 3 und 4 wird nunmehr die Befestigung des Unterbaus 13 an der Versorgungseinheit 2 genauer erläutert. Der Quersteg 2d weist an seiner in Einbaulage unteren Seite zwei im Querschnitt T-förmige Längsnuten 2e und 2f auf, in welchen mit einem Flachkopf versehene Befestigungsbolzen 20 längsverschieblich geführt sind; der Flachkopf der Befestigungsbolzen liegt innenseitig auf den Schenkeln der Längsnuten 2e, 2f auf und das Gewindeende der Bolzen ragt aus den Längsnuten 2e, 2f hervor. Der Unterbau 13 wird nach Art einer Schublade an der Versorgungseinheit 2 gehalten. Zu diesem Zweck ist an dem Befestigungsbolzen 20 ein Blech 21 festgeschraubt, das im wesentlichen eine L-förmige Gestalt aufweist. Der Längsschenkel des Blechs 21 ist an der Unterseite des Querstegs 2d durch den Befestigungsbolzen angeschraubt. Etwa mittig weist das Blech 21 an seinem Längsschenkel eine Stufe auf, um einen Auflagebereich zu bilden, der in einen in Einbaulage vertikal verlaufenden Vertikalsteg übergeht. In dem Vertikalsteg ist ein sich in Betrachtungsrichtung der Figur 5 erstreckender Längsschlitz 22 vorgesehen. In diesen Längsschlitz 22 ist ein Stift 23 längsverschieblich geführt, der den Vertikalsteg des Blechs 21 mit einem Seitenblech des Unterbaus verbindet. Das Seitenblech weist im Querschnitt gesehen eine L-förmige Gestalt auf, mit einem in Einbaulage gelegenen horizontalen Steg, der in Einbaulage auf dem stufenartig abgesenkten Teil des Blechs 21 aufliegt, und einem sich daran anschließenden vertikalen Steg. Zwischen dem horizontalen Steg und der Stufe des Blechs 21 ist ein Gleitlager 25 vorgesehen, um das Abziehen des Unterbaus von der Wand zu vereinfachen. Der Unterbau 13 ist an dem nicht dargestellten anderen Stirnende mit einer spiegelbildlich ausgebildeten Anordnung befestigt. Die an dem Unterbau vorgesehenen Seitenbleche 24 liegen also in Einbaulage auf den Stufenblechen 21 verschieblich auf.

Zum Versetzen der Unterbauten werden diese schubladenartig ausgezogen und die auf den Befestigungsbolzen 20 angeordneten Muttern werden gelöst, so daß die Unterbauten 12, 13 entlang der Längsachse der Versorgungseinheit 2 verschoben werden können. In der neuen Position werden die Bolzen 20 wieder angezogen, um den Unterbau 13 an der neu gewünschten Stelle zu fixieren. Das Seitenblech 24 ist vorliegend mit einer Abdeckkappe 26 verdeckt, die auf die stirnseitigen Enden des Unterbaus aufschnappbar sind.

In der Figur 3, die eine Seitenansicht der Versorgungseinheit 2 und des Unterbaus 13 darstellt, ist der Unterbau 13 in seiner ausgezogenen Stellung gestrichelt dargestellt.

Wie besonders gut der Figur 5 zu entnehmen ist, kann in die obere freie Öffnung der Versorgungseinheit 2 ein nach oben strahlendes Raumlicht eingesetzt werden. Von diesem Raumlicht 27 sind die Fassungen 28 für die Leuchtstoffröhren sichtbar. Das Raumlicht 27 und die notwendigen Aggregate werden in bekannter Weise in der Versorgungseinheit 2 befestigt. An der in Einbaulage nach vorne gerichteten Schrägseite des Unterbaus 13 ist schließlich ein Leselicht mit einem Raster 30 vorgesehen. Schließlich ist an der Unterseite des Unterbaus 13 eine Steckdose 31 eingelassen.

Die Erfindung ermöglicht es erstmalig, sämtliche für die Versorgung eines Patienten notwendigen Anschlusseinrichtungen in dem Anbau vorzusehen und bedarfsgerecht logistisch optimal oberhalb des Kopfendes des oder der Betten in Abhängigkeit von der Raumgeometrie und der gewünschten Aufstellung der Betten zu positionieren. So ist es auch denkbar ISDN- und Telefonanschlüsse und dergleichen in dem Anbau vorzusehen.

### Bezugszeichenliste

- 1: Wand
- 2: Versorgungseinheit
- 2a: Grundsteg
- 2b: Horizontalsteg
- 2c: Einhangsteg
- 2d: Quersteg
- 2e: Längsnut
- 2f: Längsnut
- 3: Abdeckung
- 4: Wand
- 5: Anschlußseite
- 6: Druckluftanschluß
- 7: Sauerstoffanschluß
- 8: Bett
- 9: Bett
- 10: Kommode
- 11: Kommode
- 12: Unterbau
- 13: Unterbau
- 14: Anschlußeinrichtung
- 15: Leselicht
- 16: Hängeschrank
- 17: Hängeschrank
- 18: Hängeschrank
- 20: Befestigungsbolzen
- 21: Blech
- 22: Längsschlitz
- 23: Stift
- 24: Seitenblech
- 25: Gleitlager
- 26: Abdeckung
- 27: Raumlicht
- 28: Fassung
- 30: Raster
- 31: Steckdose

## Patentansprüche

1. Versorgungseinheit (2), insbesondere zur Versorgung von Patienten im Krankenpflegebereich, bestehend aus mindestens einem, vorzugweise kanalartigen, Profil zur Aufnahme und Führung von Versorgungsleitungen, das einen an einem Untergrund befestigbaren, in Längserstreckungsrichtung verlaufenden Grundsteg (2a) und mindestens einen im wesentlichen quer zum Grundsteg (2a) verlaufenden Quersteg (2d) aufweist, **dadurch gekennzeichnet**,
daß der Quersteg (2d) mindestens ein Loch aufweist, und daß im Bereich des Lochs ein Anbau in Längserstreckungsrichtung der Versorgungseinheit (2) verschieblich fixierbar ist, an dem Anschlußeinrichtungen (14), Leuchten und dergleichen vorgesehen sind, die durch das Loch mit den Versorgungsleitungen verbindbar sind.

2. Versorgungseinheit (2) nach Anspruch 1, **dadurch gekennzeichnet**, daß das Loch als Langloch ausgebildet ist.

3. Versorgungseinheit (2) nach Anspruch 1, **dadurch gekennzeichnet**, daß der Anbau als gondelartiger Unterbau (12, 13) ausgebildet ist, der in Einbaulage unterhalb der Versorgungseinheit (2) angeordnet ist.

4. Versorgungseinheit (2) nach Anspruch 1 bis 3, **dadurch gekennzeichnet**, daß der Anbau relativ zu der versorgungseinheit (2) von dem Untergrund vorziehbar ist.

5. Versorgungseinheit (2) nach einem Anspruch 1 bis 4, **dadurch gekennzeichnet**, daß der Anbau mindestens eine Leuchte aufweist.

6. Versorgungseinheit (2) nach einem der Ansprüche 2 bis 5, **dadurch gekennzeichnet**, daß das Langloch eine Länge von etwa 30cm aufweist.

7. Versorgungseinheit (2) nach einem der Ansprüche 1 bis 6 mit einer an einem Ende vorgesehenen Anschlußseite (14), **dadurch gekennzeichnet**, daß die Mitte des Langlochs oder der Langlöcher in einem vorbestimmten Abstand zur Anschlußseite (14) angeordnet sind.

8. Versorgungseinheit (2) nach einem der Ansprüche 1 bis 7, **dadurch gekennzeichnet**, daß die Anschlußeinrichtungen (14), Leuchten und dergleichen mittels Steckverbindungen lösbar mit den Versorgungsleitungen verbindbar sind.
